# NEW EUROPEAN PATENT SPECIFICATION

(11) **EP 0 638 231 B2**
(45) Date of publication and mention of the opposition decision: **05.04.2006**
(45) Mention of the grant of the patent: 14.03.2001
(21) Application number: 94202258.3
(22) Date of filing: 05.08.1994
(51) Int. Cl.: A01J 7/00, A01K 1/12, A01K 11/00

(54) **A construction for automatically milking animals**
Vorrichtung zum automatischen Melken von Tieren
Dispositif de traite automatique d'animaux

(30) Priority: 09.08.1993 NL 9301377
(43) Date of publication of application: 15.02.1995
(60) Divisional application: 00116842.6
(73) Proprietor: MAASLAND N.V., 3155 PD Maasland (NL)
(72) Inventor: Van der Lely, Cornelis, CH-6300 Zug (CH)
(74) Representative: Corten, Maurice Jean F.M.

(56) References cited:
- EP-A- 0 189 954
- EP-A- 0 332 230
- EP-A- 0 551 957
- DE-A- 3 702 465
- FR-A- 1 576 765
- NL-A- 8 902 505

## Description

The present invention relates to a construction or a similar arrangement for automatically milking animals.

Such a construction is known from EP-A-0 551 957.

In this construction the computer system comprises a programme to ensure that the animals, which are at the beginning of a lactation period are given priority for entering the milking parlour over animals which are not at the beginning of the lactation period.

The invention has for its object to provide an alternative construction.

According to the invention this is achieved by the features as defined in claim 1.

The stimulation means can, for example, be disposed in the lying boxes and feed stations present in the construction, whilst, using the stimulation means an animal present in a lying box or in a feed station can be stimulated by light or audio signals or by applying electric shocks to go to the milking robot.

Since the animals can freely report at the milking box, lured thereto for example, because they can get concentrate there, it must be checked whether a sufficiently long period of time has elapsed after the previous milking turn. Put differently, a selection must be effected of the animals reporting at the milking box, more specifically in that sense that only those animals whose previous milking turn was a sufficiently long period of time before, are passed to the milking box. With the aid of the animal identification system constituted by the animal identification sensor present in this selection box and connected to the computer system and by the transponder to be worn by the animal, it can be decided on the basis of the file stored for this an imal in the computer system whether the animal is to be sent back to the shed of the construction or must be allowed to go to the milking box.

In an advantageous embodiment, each of the boxes can be provided at one side with at least two doors, through which an animal can consecutively and sideways move from one box to the other. In a preferred embodiment the doors will be pivotally arranged approximately halfway the long side of a relevant box, and a door will have an end which in the closed state curves towards the midway point of the box. As a consequence thereof, by moving the exit door of the rear box and the entrance door of the front box to a first opened state, a connection between the rear and the front box will be established, so that an animal present in the rear box can be guided to the first box via this passage. By keeping the entrance door of the front box closed and by moving the exit door of the rear box to a second opened state, the animal can be passed back to the shed of the construction, which will be the case when it has been decided in the rear box that the animal cannot yet be milked and consequently is not allowed to go to the milking box.

For a better understanding of the invention and its constructive details and to show how the same may be carried into effect, reference will now be made by way of example, to an embodiment shown in the accompanying drawings, in which:
Figure 1 shows the lay-out of two boxes, the rear one of which is arranged for selecting the animals, possibly massaging and cleaning the udder of an animal present in this box and feeding it with concentrate whereas the front box is arranged as a milking box in which concentrate can also be supplied to the animal;
Figure 2 is a plan view of the milking box shown in Figure 1;
Figure 3 is a side view of this milking box;
Figure 4 is a plan view of an alternative embodiment of the milking box

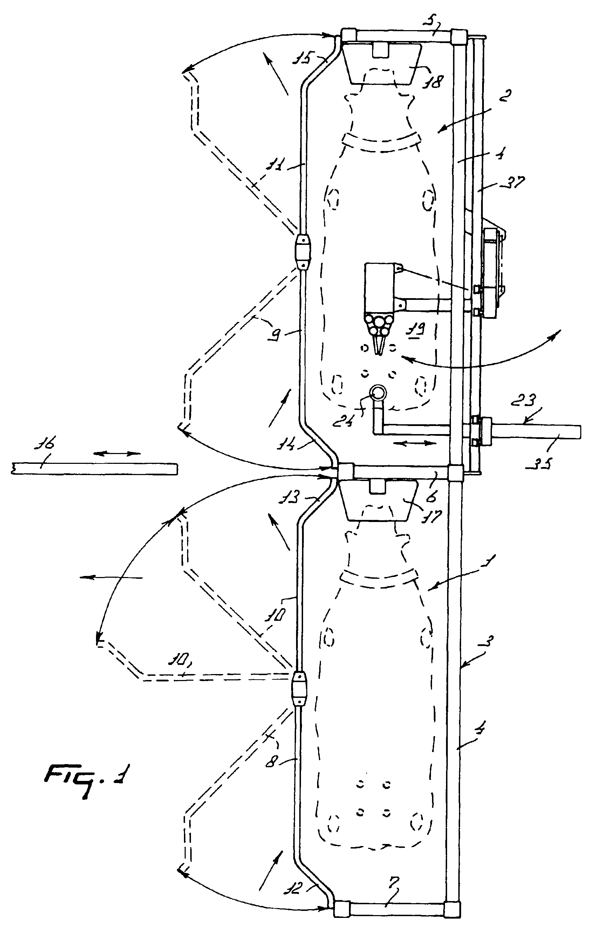

Figure 1 shows two boxes 1 and 2 which are contiguous to each other in the lengthwise direction. These boxes are bounded by a frame 3 consisting of a frame portion 4 forming a longitudinal side of the two boxes the frame portions 5. 6 and 7 forming the short sides of the boxes and doors provided at the other longitudinal side of the boxes 1 and 2, the entrance doors of the boxes 1 and 2 being denoted by the reference numerals 8 and 9 and the exit doors of the boxes by 10 and 11. The doors 8 and 10 are pivotal approximately halfway the longitudinal side of box 1, whereas the doors 9 and 11 are pivotal approximately halfway the longitudinal side of box 2. Near their ends the doors 8 to 11 have a portion 12 and 13, 14, 15, respectively, which in the closed condition of the doors extend to the midway point of the relevant boxes. These inwardly directed portions 12 to 15 are disposed such that, when the doors have been moved to a first opened state, illustrated by means of broken lines in Figure 1, the inwardly extending portions 12 to 15 are predominantly located such that they are in alignment, parallel to the longitudinal direction of the two boxes. Particularly by moving the exit door 10 of box 1 and the entrance door 9 of box 2 to this first opened state, a lateral connecting passage is formed between box 1 and box 2 and an animal can be guided from box 1 into the box 2. In the Figure there is furthermore provided a partition 16 which extends transversely to the longitudinal direction of the boxes, more specifically in the region of the lateral frame portion 6 between the two boxes. This partition 16 is movable in a direction transversely of the longitudinal direction of the boxes, whilst the partition 16 remains in alignment with the transverse frame portion 6. When the partition is in the position shown in Figure 1, then an animal can pass from box 1 to box 2 when the doors 9 and 10 have been moved to the first opened state, whilst, when the partition 16 has been moved towards the transverse frame portion 6 and thereafter the door 10 has been moved to a second opened state, illustrated by broken lines in Figure 1, then an animal can be returned from box 1 to the shed of the construction. The system can operate in an excellent manner also without the partition 16, as, by keeping the door 9 closed and moving the door 10 to the second opened state, an animal can be denied access to box 2 and will be forced to enter the shed of the construction. However, for the case in which the area aside of the doors 9 and 11 of box 2 are given a different destination, the movable partition is of importance.

The boxes 1 and 2 both include an automatic feeding implement 17 and 18. Near these automatic feeders both boxes accommodate an animal identification sensor (not shown in the Figures) which is connected to a computer system, which animal identification sensors form an animal identification system in combination with a transponder worn by the animals. With the aid of this animal identification system it is permanently updated in the computer system which animal is present at which moment in which box. For that purpose the memory of the computer system has a separate file for each animal, in which file all relevant information about the relevant animal has also been stored. More in particular, in this file it is recorded when an animal has been milked for the last time, so that it is always known how much time has elapsed between the latest milking turn and the instant an animal has entered the box 1, when an animal has calved last, when the lactation period of an animal has started, how much milk it yields in each milking turn, etc. This information is important to decide whether an animal may enter the box 1, may be milked or not. The box 1 is therefore also provided with means for selecting the animals, whilst furthermore the opportunity can be used to clean and optionally massage the udder of the animal to stimulate the milk production, when by means of the animal identification system and the data in the file of the relevant animal in the memory of the computer system it has been decided that the animal may be milked, whilst in addition concentrate can be supplied to the animal in the box 1. The box 2 is equipped as a milking box, into which an animal is admitted from box 1 for the purpose of being milked, whilst additional concentrate can be fed to the animal if desired.

An animal which has recently calved, can automatically be milked one or more times per 24 hour's period more frequently than the average number of times the other animals of the herd, to which the recently calved animal belongs, are milked. It is can automatically recorded in the computer system how many times a given animal can be milked in each 24 hour's period and the animals can be stimulated to go at the proper moments, summoned by the computer system, to the boxes 1 and 2. In the computer it has been recorded with what interval an individual animal can be milked. When the time intervals between consecutive milking turns have been determined, measures must be taken to ensure that the animals are stimulated to go to the milking box after these relevant time intervals have elapsed. To that end, stimulating means may be placed all over the construction, more specifically in the lying boxes and in the feeding stations, for stimulating the animal to go to the milking box. These stimulating means can, for example, produce sound or light signals or, more in particular, the animals in the lying boxes and in the feeding stations can be given electric shocks, which contribute to forcing the animals to go from the lying box or feeding station to the milking boxes 1 and 2 through the shed. A suitable shed lay-out, more specifically such a shed lay-out in which the animals must follow a fixed path through the shed to the milking box, will definitely contribute thereto.

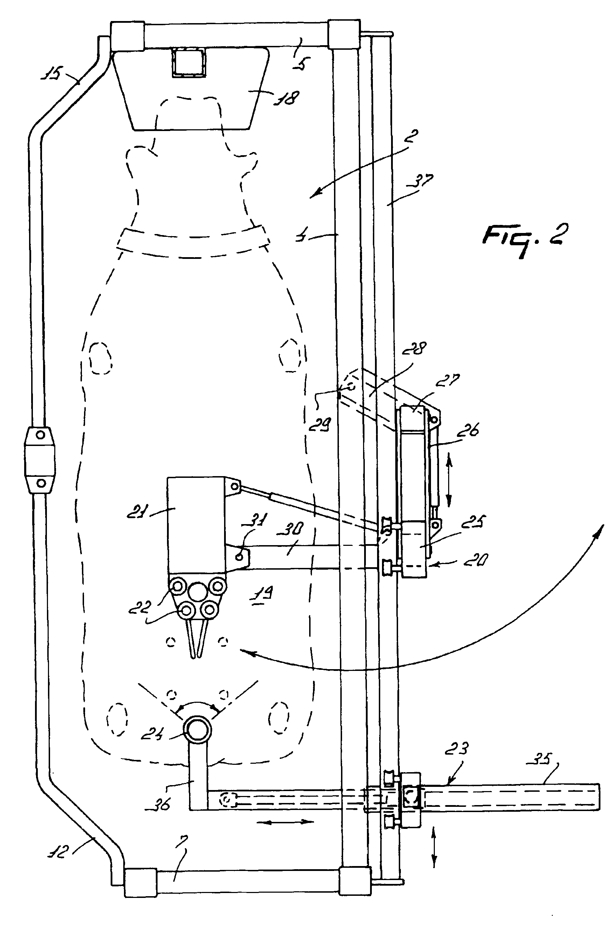

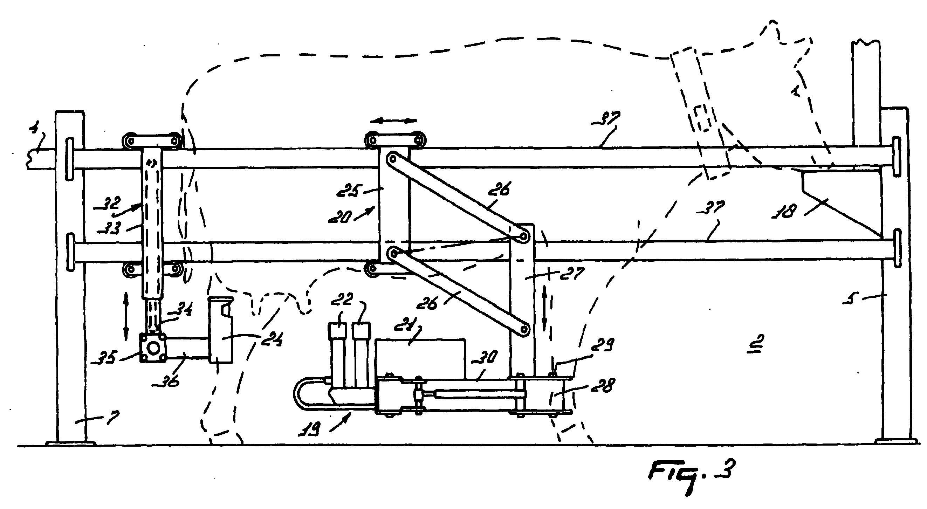

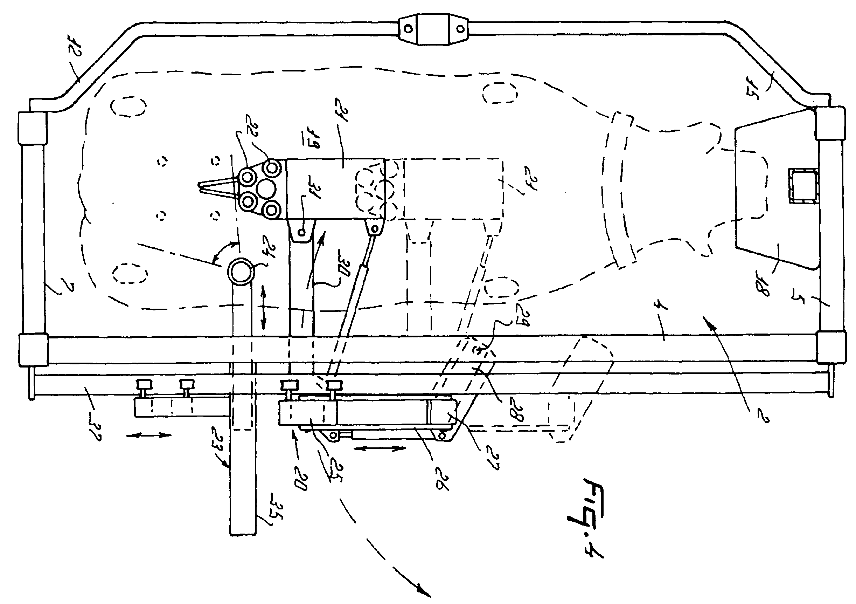

Figures 2 and 3 are a plan view and a side view, respectively, of only the milking box 2. For the milking operation a milking robot 19 is present, which includes a robot arm construction 20, at the end of which a robot head 21 is disposed which serves as a carrier for four teat cups 22. In addition, the milking robot 19 includes a carrier structure 23 for a detection member 24. The robot arm construction 20 carrying the robot head 21 and the teat cups 22 is independently movable with respect to the carrier structure 23 with the detection member 24.

The robot arm structure 20 is constituted by a carrier element 25 which is movable over a rail 37, parallel to the frame portion 4, and to which a carrier 27 which can be moved up and down is attached by means of a parallelogram structure 26. At its bottom side the carrier 27 is provided with a supporting element 28 which is rigidly connected thereto and extends inwardly and slightly forwardly. A robot arm 30 is connected capable of pivoting about an upwardly directed shaft 29 to the supporting element 28. The robot head 21 is attached capable of pivoting about an upwardly directed shaft 31 to the end of the arm 30. By a motion in the longitudinal direction of the milking box 2, a pivotal movement about the shaft 29 and, if necessary, by pivoting the robot head 21 about the shaft 31 with respect to the robot arm 30, all the desired movements of the robot head 21 in a horizontal plane to under the animal standing in the box 2 are possible, whilst with the aid of the parallelogram structure 26 an up and down motion can be obtained. All these movements are controlled by, preferably pneumatical, cylinders, since these cylinders slightly yield when the animal pushes or kicks against the robot arm structure. The pneumatic working cylinders are controlled by the computer system.

Independently of the robot arm structure 20, which is in a position more advanced to the leading side of the milking box 2, there is disposed, near the rear side of the milking box 2, the carrier structure 23 for the detection member 24. Also the carrier structure 23 includes a carrier element 32 which is movable along the rail 37. This carrier element 32 is constituted by a hollow beam 33, within which an inner beam 34 is disposed capable of moving upwardly and downwardly. At the bottom side of this inner beam 34 a carrier 35 is present which is movable transversely to the longitudinal direction of the milking box 2 and at the end of which carrier 35 a supporting element 36 for the detection member 24 is attached. By the capability of moving in the longitudinal direction of the milking box 2, the capability of moving in height of the inner beam 34 with respect to the hollow beam 33 and the capability of transverse motion of the carrier 35 with the supporting element 36 and the detection member 24 with respect to the inner beam 34, a motional feature of the detection member 24 in three coordinates is realized, which motional feature itself is rendered possible with the aid of the, preferably computer-controlled, pneumatic cylinders. In Figure 1 it is shown how, with the aid of the carrier structure 23, the detection member 24 is adjusted to a position in which this detection member has been moved passing between the two hind legs of the animal present in the milking box 2 to a position close to the hind teats of the animal. As the detection member 24 is designed as a laser which is pivotal about an upwardly directed shaft and produces a very narrow scanning beam, which is moved from a short distance over the teats of the animal, an extremely accurate positional determination of the teats is made possible. The detection member 24 can be adjusted to the position shown by moving the detection member to a central position between the two longitudinal sides and by moving it thereafter to a position which is determined from the computer system on the basis of the data stored in the file of the animal about the position of the teats. Here the motion of the detection member 24 is performed totally independently of the robot arm carrier structure 20 of the teat cups 22 and is therefore not obstructed thereby in any way. When by means of the detection member 24 the position of the individual teats has been stored, the teat cups 22 which have been moved in the meantime to under the animal's udder, can be connected.

Figure 4 shows an alternative embodiment of the carrier structure 23 for the detection member24. The detection member 24 is then directly disposed at the end of the carrier 35. As a result thereof it is possible to approach the udder of the animal present in the milking box 2 from the side using the detection member 24. As in this situation the carrier structure 23 and, more in particular the carrier 35, is in a more advanced position, it will be necessary for the robot arm structure 20 to be adjusted to a more advanced position so as to be able to pivot to under the animal without any obstruction by the carrier structure 23. Not until the robot head 21 has been moved to under the animal, more specifically to a position indicated by broken lines, the robot head 21 can be moved rearwardly towards the udder.

In the foregoing description the place in which the animals are present during milking is designated as a milking box. It will be obvious that this milking box may be of any conceivable design; it may also form part of the shed. The invention is therefore not limited to the construction shown here and is also not limited to the embodiments described sofar, but also relates to all kinds of modifications thereof, of course in sofar they are within the scope of the accompanying claims.

## Claims

1. A construction or a similar arrangement for automatically milking animals, such as cows, comprising a milking box (2) with a milking robot (19) the construction including two boxes (1, 2) which are contiguous to each via their ends, the first (1) of these boxes being arranged for selecting and/or supplying animals with concentrate and the second (2) being arranged as said milking box, each box (1, 2) including an animal identification sensor which is connected to a computer system and, in combination with a transponder to be worn by each of the animals forms an animal identification system, with which it is possible to update in the computer system which animal is present in the milking box (2), the computer system comprising a file in which it is recorded when an animal has been milked for the last time, when an animal has calved last, when the lactation period of an animal has started, how much milk it yields in each milking turn, and in which it is automatically recorded how many times said animal can be milked in each 24 hours' period and with what interval, wherein said animal is milked one or more times more frequently per 24 hours' period than the average number of times the other animals of the herd to which the animal which has recently calved belongs, and that stimulation means controlled by the computer system are present for summoning the animal after the time interval between consecutive milking turns determined and recorded by the computer system has elapsed, to go to the milking robot (19).

2. A construction as claimed in claim 1, **characterized in that** it includes lying boxes and feeding stations in which the stimulating means are disposed, with the aid of which stimulating means an animal present in a lying box or in a feeding station can be stimulated by light or audio signals or by the application of electric shocks to go to the milking robot.

3. A construction as claimed in claim 1, **characterized in that** each of the boxes (1, 2) has at one side at least two doors (8 to 11) through which an animal can consecutively go sideways from one box to the other.

4. A construction as claimed in claim 3, **characterized in that** the doors (8 to 11) are pivotally disposed approximately halfway the long side of a relevant box.

5. A construction as claimed in claim 4, **characterized in that** in the closed state a door (8 to 11) has one end (12 to 15) which is rounded-off towards the midway point of the box (1, 2).

6. A construction as claimed in claim 4 or 5, **characterized in that** the exit door (10) of the rear box (1) and the entrance door (9) of the leading box (2) allow in a first opened state an animal present in the rear box (1) to go to the leading box (2).

7. A construction as claimed in any one of claims 4 to 6, **characterized in that** the exit door (10) of the rear box (1) forces in a second opened state, in which the entrance door (9) of the leading box (2) remains closed, an animal present in the rear box (1) to return to the shed area of the construction.

8. A construction as claimed in any one of claims 4 to 7, **characterized in that** transversely of the longitudinal direction of the two boxes (1, 2) in the region where they connect up with each other a partition (16) is present which is movable in the transverse direction and is moved away from the boxes (1. 2) when an animal is to pass from the rear (1) to the leading box (2) and is moved towards the boxes (1. 2) when an animal is denied access from the rear box (1) to the leading box (2) and is to return to the shed area of the construction.

9. A construction as claimed in any one of claims 3 to 8, **characterized in that** each box (1, 2) includes an automatically controlled feed trough (17, 18).

10. A construction as claimed in claim 1, **characterized in that**, with the aid of the animal identification system and the information stored in the computer system about the animal present in the rear box (1), it is decided whether the animal is given access to the leading box (2) or is returned to the shed area of the construction.

11. A construction as claimed in any one of claims 3 to 10, **characterized in that** the rear box (1) is not only arranged as a selection box, but also for massaging the udder of an animal, cleaning the animal and supplying it with concentrate.

12. A construction as claimed in any one of the preceding claims, **characterized in that** it is arranged as a loose housing.

## Patentansprüche

1. Vorrichtung oder ähnliche Anordnung zum automatischen Melken von Tieren, wie z. B. Kühen, die eine Melkbox (2) mit einem Melkroboter (19) umfaßt, wobei die Vorrichtung zwei Boxen (1, 2) enthält, deren Enden aneinander angrenzen, wobei die erste Box (1) dieser Boxen zum Auswählen und/oder zum Versorgen von Tieren mit Kraftfutter dient und die zweite Box (2) die Melkbox bildet, wobei jede Box (1, 2) einen Tieridentifikationssensor enthält, der mit einem Computersystem verbunden ist und in Kombination mit einem von jedem der Tiere zu tragenden Transponder ein Tieridentifikationssystem bildet, mit dem es möglich ist, in dem Computersystem festzustellen, welches Tier sich in der Melkbox (2) befindet, wobei das Computersystem eine Datei enthält, in der aufgezeichnet ist, wann ein Tier zum letzten Mal gemolken wurde, wann ein Tier zuletzt gekalbt hat, wann die Laktationsperiode eines Tieres begonnen hat, wieviel Milch es bei jedem Melkdurchgang gibt, und in der automatisch aufgezeichnet wird, wie oft pro 24-Stunden-Zeitraum und in welchem Intervall das Tier gemolken werden kann, wobei das Tier pro 24-Stunden-Zeitraum ein oder mehrere Male öfter gemolken wird als die durchschnittliche Anzahl von Malen, die die anderen Tiere der Herde gemolken werden, zu der das Tier gehört, das kürzlich gekalbt hat, und wobei von dem Computersystem gesteuerte Stimulierungsvorrichtungen vorhanden sind, um das Tier zu veranlassen, nach Ablauf des von dem Computersystem festgelegten und aufgezeichneten Zeitintervalls zwischen aufeinanderfolgenden Melkdurchgängen zum Melkroboter (19) zu gehen.

2. Vorrichtung nach Anspruch 1,
**dadurch gekennzeichnet, daß** die Vorrichtung Ruheboxen und Fütterungsstationen enthält, in denen die Stimulierungsvorrichtungen angeordnet sind, mittels derer ein in einer Ruhebox oder einer Fütterungsstation befindliches Tier durch Licht oder akustische Signale oder durch Anwendung von Elektroschocks dazu veranlaßt werden kann, zum Melkroboter zu gehen.

3. Vorrichtung nach Anspruch 1,
**dadurch gekennzeichnet, daß** jede der Boxen (1, 2) auf einer Seite mindestens zwei Türen (8 bis 11) aufweist, durch die ein Tier aufeinanderfolgend seitlich von einer Box zur anderen gehen kann.

4. Vorrichtung nach Anspruch 3,
**dadurch gekennzeichnet, daß** die Türen (8 bis 11) etwa in der Mitte der Längsseite einer jeweiligen Box schwenkbar angeordnet sind.

5. Vorrichtung nach Anspruch 4,
**dadurch gekennzeichnet, daß** eine Tür (8 bis 11) in geschlossenem Zustand ein Ende (12 bis 15) aufweist, das zur Mitte der Box (1, 2) hin abgerundet ist.

6. Vorrichtung nach Anspruch 4 oder 5,
**dadurch gekennzeichnet, daß** die Ausgangstür (10) der hinteren Box (1) und die Eingangstür (9) der vorderen Box (2) in einer ersten Öffnungsstellung es einem in der hinteren Box (1) befindlichen Tier gestatten, in die vordere Box (2) zu gehen.

7. Vorrichtung nach einem der Ansprüche 4 bis 6,
**dadurch gekennzeichnet, daß** die Ausgangstür (10) der hinteren Box (1) in einer zweiten Öffnungsstellung, in der die Eingangstür (9) der vorderen Box (2) geschlossen bleibt, ein in der hinteren Box (1) befindliches Tier dazu zwingt, in den Stallbereich der Vorrichtung zurückzukehren.

8. Vorrichtung nach einem der Ansprüche 4 bis 7,
**dadurch gekennzeichnet, daß** quer zur Längsrichtung der beiden Boxen (1, 2) in dem Bereich, in dem die Boxen aneinander angrenzen, eine Trennwand (16) vorhanden ist, die in Querrichtung bewegbar ist und von den Boxen (1, 2) weg bewegt wird, wenn ein Tier von der hinteren (1) zur vorderen Box (2) gehen soll, und zu den Boxen (1, 2) hin bewegt wird, wenn ein Tier daran gehindert wird, von der hinteren Box (1) zur vorderen Box (2) zu gehen, und in den Stallbereich der Vorrichtung zurückkehren soll.

9. Vorrichtung nach einem der Ansprüche 3 bis 8,
**dadurch gekennzeichnet, daß** jede Box (1, 2) einen automatisch gesteuerten Futtertrog (17, 18) enthält.

10. Vorrichtung nach Anspruch 1,
**dadurch gekennzeichnet, daß** mit Hilfe des Tieridentifikationssystems und der in dem Computersystem gespeicherten Information über das in der hinteren Box (1) befindliche Tier entschieden wird, ob dem Tier der Zutritt zur vorderen Box (2) gestattet wird, oder ob es in den Stallbereich der Vorrichtung zurückgeschickt wird.

11. Vorrichtung nach einem der Ansprüche 3 bis 10,
**dadurch gekennzeichnet, daß** die hintere Box (1) nicht nur als Auswahlbox dient, sondern auch zum Massieren des Euters eines Tieres, zum Reinigen des Tieres und zu seiner Versorgung mit Kraftfutter.

12. Vorrichtung nach einem der vorhergehenden Ansprüche,
**dadurch gekennzeichnet, daß** die Vorrichtung als Laufstall ausgeführt ist.

## Revendications

1. Installation, ou agencement similaire, destinée à la traite automatique d'animaux, tels que des vaches, comportant un box de traite (2) muni d'un robot de traite (19), l'installation comportant deux box (1, 2) qui sont contigus l'un à l'autre par leurs extrémités, le premier (1) de ces box étant agencé pour sélectionner et/ou pour fournir aux animaux du fourrage concentré et le second (2) étant agencé sous le forme d'un box de traite, chaque box (1,2) comportant un capteur d'identification d'animal qui est connecté à un système informatique et forme un système d'identification d'animal en association avec un transpondeur devant être porté par chacun des animaux, à l'aide duquel il est possible de mettre à jour dans le système informatique quel animal est présent dans le box de traite (2), le système informatique comportant un fichier dans lequel on enregistre quand un animal a été trait pour la dernière fois, quand un animal a mis bas pour la dernière fois, quand la période de lactation d'un animal a débuté, combien de lait il produit lors que chaque tour de traite, et dans lequel on enregistre automatiquement combien de fois ledit animal peut être trait pendant chaque période de 24 heures et selon quel intervalle, **caractérisée en ce que** ledit animal est trait une ou plusieurs fois plus fréquemment par période de 24 heures que le nombre moyen de fois des autres animaux du troupeau auquel appartient l'animal qui a récemment mis bas, et **en ce que** des moyens d'incitation commandés par le système informatique sont présents pour inciter l'animal à aller jusqu'au robot de traite (19) lorsque l'intervalle de temps entre deux tours de traite déterminé et enregistré dans le système informatique s'est écoulé.

2. Installation selon la revendication 1, **caractérisée en ce qu'**elle comporte des box de repos et des emplacements d'alimentation dans lesquels sont disposés les moyens d'incitation, moyens d'incitation à l'aide desquels un animal présent dans un box de repos ou dans un emplacement d'alimentation peut être incité par des signaux visuels ou audibles, ou par l'application de décharges électriques, à aller jusqu'au robot de traite.

3. Installation selon la revendication 1, **caractérisée en ce que** chacun des box (1, 2) a au niveau d'un premier côté au moins deux portes (8 à 11) à travers lesquelles un animal peut consécutivement aller latéralement d'un premier box à l'autre.

4. Installation selon la revendication 3, **caractérisée en ce que** les portes (8 à 11) sont disposées de manière pivotante approximativement à mi-chemin du côté long d'un box concerné.

5. Installation selon la revendication 4, **caractérisée en ce que** dans l'état fermé, une porte (8 à 11) a une extrémité (12 à 15) qui est arrondie vers le point médian du box (1, 2).

6. Installation selon la revendication 4 ou 5, **caractérisée en ce que** la porte de sortie (10) du box arrière (1) et la porte d'entrée (9) du box avant (2) permettent, dans un premier état ouvert, à un animal présent dans le box arrière (1) d'aller jusqu'au box avant (2).

7. Installation selon l'une quelconque des revendications 4 à 6, **caractérisée en ce que** la porte de sortie (10) du box arrière (1) force, dans un second état ouvert dans lequel la porte d'entrée (9) du box avant (2) reste fermée, un animal présent dans le box arrière (1) à retourner jusqu'à la zone de hangar de l'installation.

8. Installation selon l'une quelconque des revendications 4 à 7, **caractérisée en ce que** transversalement à la direction longitudinale des deux box (1, 2), dans la zone où ils se connectent l'un avec l'autre, une séparation (16) est présente qui est mobile dans la direction transversale, et est déplacée loin à partir des box (1,2) lorsqu'un animal passe du box arrière (1) au box avant (2), et est déplacée en direction des box (1, 2) lorsqu'on refuse à un animal l'accès à partir du box arrière (1) jusqu'au box avant (2), et lorsqu'il est ramené à la zone de hangar de l'installation.

9. Installation selon l'une quelconque des revendications 3 à 9, **caractérisée en ce que** chaque box (1,2) comporte une auge d'alimentation commandée automatiquement (17, 18).

10. Installation selon la revendication 1, **caractérisée en ce que**, à l'aide du système d'identification d'animal et des informations mémorisées dans le système informatique concernant l'animal présent dans le box arrière (1), on décide si on permet à un animal d'accéder au box avant (2) ou si on le ramène jusqu'à la zone du hangar de l'installation.

11. Installation selon l'une quelconque des revendications 3 à 10, **caractérisée en ce que** le box arrière (1) n'est pas seulement agencé sous la forme d'un box de sélection, mais également pour masser le pis d'un animal, nettoyer l'animal et lui envoyer du fourrage concentré.

12. Installation selon l'une quelconque des revendications précédentes, **caractérisée en ce qu'**elle est agencée sous la forme d'un bâtiment ouvert.
